# EUROPÄISCHE PATENTSCHRIFT

(11) **EP 1 520 161 B1**
(45) Veröffentlichungstag und Bekanntmachung des Hinweises auf die Patenterteilung: **12.09.2007**
(21) Anmeldenummer: 03762429.3
(22) Anmeldetag: 01.07.2003
(51) Int. Cl.: G01M 1/32

(54) **VORRICHTUNG UND VERFAHREN ZUM BEFESTIGEN VON AUSGLEICHSGEWICHTEN AN ROTOREN, INSBESONDERE AN GELENKWELLEN ODER KARDANWELLEN**
DEVICE AND METHOD FOR FIXING BALANCING WEIGHTS TO ROTORS, IN PARTICULAR TO ARTICULATED SHAFTS OR CARDAN SHAFTS
DISPOSITIF ET PROCEDE POUR FIXER DES POIDS D'EQUILIBRAGE SUR DES ROTORS, NOTAMMENT SUR DES ARBRES DE TRANSMISSION OU DES ARBRES A CARDAN

(30) Priorität: 04.07.2002 DE 10230207
(43) Veröffentlichungstag der Anmeldung: 06.04.2005
(73) Patentinhaber: Schenck RoTec GmbH, 64293 Darmstadt (DE)
(72) Erfinder: ROGALLA, Martin, 64297 Darmstadt (DE); HILLRINGHAUS, Frank, 64342 Seeheim (DE)
(74) Vertreter: Haar, Lucas Heinz Jörn
(86) Internationale Anmeldenummer: PCT/DE2003/002180
(87) Internationale Veröffentlichungsnummer: WO 2004/005878

(56) Entgegenhaltungen:
- DE-A- 1 573 678
- DE-A- 4 440 812
- PATENT ABSTRACTS OF JAPAN vol. 011, no. 044 (M-560), 10. Februar 1987 (1987-02-10) & JP 61 209780 A (DENGENSHA MFG CO LTD), 18. September 1986 (1986-09-18)
- PATENT ABSTRACTS OF JAPAN vol. 018, no. 624 (P-1833), 28. November 1994 (1994-11-28) & JP 06 241936 A (TOYOTA MOTOR CORP), 2. September 1994 (1994-09-02)
- PATENT ABSTRACTS OF JAPAN vol. 006, no. 088 (P-118), 26. Mai 1982 (1982-05-26) & JP 57 023834 A (TOYODA MACH WORKS LTD;OTHERS: 01), 8. Februar 1982 (1982-02-08)
- PATENT ABSTRACTS OF JAPAN vol. 005, no. 060 (P-058), 23. April 1981 (1981-04-23) & JP 56 012529 A (TOYOTA MOTOR CORP), 6. Februar 1981 (1981-02-06)

## Beschreibung

Die Erfindung betrifft eine Vorrichtung zum Befestigen von Ausgleichsgewichten an Rotoren mit mehreren Ausgleichsebenen, insbesondere an Gelenkwellen oder Kardanwellen, vorzugsweise in einer Auswuchtmaschine, die zumindest eine längs der Rotorachse positionierbare zangenartige Einrichtung aufweist, mit der ein Ausgleichsgewicht am Außenumfang des Rotors plazierbar und dort befestigbar ist, sowie ein Verfahren zum Befestigen von Ausgleichsgewichten an Rotoren mittels einer zangenartigen Einrichtung.

Vorrichtungen und Verfahren der eingangs genannten Art werden in der Serienfertigung eingesetzt, um größere Stückzahlen von Rotoren, die mehrere Ausgleichsebenen aufweisen, beispielsweise Gelenkwellen oder Kardanwellen, wirtschaftlich auszuwuchten.

Aus der DE 44 40 812 A1 ist bekannt, einen Rotor, beispielsweise eine Kardanwelle, in einer Auswuchtmaschine anzuordnen, die Unwucht nach Größe und Winkellage zu ermitteln und anschließend mittels zumindest einer, der Auswuchtmaschine zugeordneten zangenartigen Einrichtung Ausgleichsgewichte in den Ausgleichsebenen der Kardanwelle am Rotorumfang zu plazieren und zu befestigen. Dazu wird das Ausgleichsgewicht von einer Einheit der zangenartigen Einrichtung aufgenommen, die zangenartige Einrichtung in die Ausgleichsposition gebracht und der Rotor in die richtige Winkellage gedreht. Dann wird das Ausgleichsgewicht befestigt mittels eines beispielsweise Klebe- oder Schweißvorganges. Zum Unwuchtausgleich in mehreren Ausgleichsebenen ist in jeder Ausgleichsebene eine zangenartige Einrichtung vorgesehen. Statt dessen kann nur eine längs der Rotorachse verschiebbare zangenartige Einrichtung vorgesehen sein, die jeweils in die betreffende Ausgleichsebene verschoben wird. Unabhängig davon, ob eine oder mehrere zangenartige Einrichtungen vorgesehen sind, erfolgt für jeden Ausgleichsschritt eine aufwendige Bestückung der zangenartigen Einrichtung mit demjenigen Ausgleichsgewicht, das an dieser Ausgleichsstelle erforderlich ist.

Der Erfindung liegt die Aufgabe zugrunde, bei einer Vorrichtung und einem Verfahren der eingangs genannten Art eine einfache und kostengünstige Applikation der erforderlichen Ausgleichsgewichte zu ermöglichen.

Die Aufgabe wird erfindungsgemäß dadurch gelöst, daß bei einer Vorrichtung der eingangs genannten Art die zangenartige Einrichtung zur Aufnahme von mehreren Ausgleichsgewichten ausgebildet ist. Zum Befestigen mittels der zangenartigen Einrichtung werden mehrere Ausgleichsgewichte quer zur Längsrichtung des Rotors bewegt und ein ausgewähltes Ausgleichsgewicht am Rotorumfang plaziert und befestigt.

Mit der Erfindung wird auf einfache Weise ein vollautomatischer Unwuchtausgleich möglich, bei dem alle Ausgleichsgewichte für den kompletten Unwuchtausgleich eines Rotors mittels nur einer zangenartigen Einrichtung am Rotor befestigt werden, ohne daß zwischenzeitliche Bestückungen mit Ausgleichsgewichten erforderlich sind. Dies schließt auch einen eventuell erforderlichen zweiten ergänzenden Unwuchtausgleichsschritt ein, der in einer in Rotorlängsrichtung eng benachbarten Ausgleichsebene des Rotors erfolgt. Die zangenartige Einrichtung kann vorteilhaft an nur einer geeigneten Beladestation mit Ausgleichsgewichten bestückt werden. Dies kann mittels einer automatischen Bestükkungseinrichtung oder auch vom Bediener erfolgen. Es wird die Häufigkeit und/oder die Dauer des Bestückungsvorgangs reduziert, so daß beispielsweise zwei Auswuchtmaschinen für Gelenkwellen oder Kardanwellen durch nur einen Bediener im überschlagenden Takt bedient werden können. Dies gilt insbesondere dann, wenn nur eine einzige Beladestation zur Bestückung mehrerer Auswuchtmaschinen vorgesehen ist und diese ergonomisch günstig beispielsweise zwischen den Auswuchtmaschinen liegt oder an deren Enden angeordnet ist. Durch den geringeren Bauaufwand aufgrund nur einer zangenartigen Einrichtung und der Vereinfachung der Bestückung mit Ausgleichsgewichten ergeben sich auch geringere Herstellungskosten.

Konstruktiv günstig ist eine Ausgestaltung der Erfindung, bei der bei einer zangenartigen Befestigungseinrichtung mit zwei Zangeneinheiten vorzugsweise die untere Zangeneinheit ein zu dieser und quer zur Rotorlängsrichtung verschiebbares Aufnahmeteil zur Aufnahme mehrerer Ausgleichsgewichte aufweist, da hier übliche Schlittenlösungen eingesetzt werden können und nur geringe träge Massen zu bewegen sind. Durch Benutzung der unteren Zangeneinheit kann in der Regel auf eine Halterung für die aufgenommenen Ausgleichsgewichte verzichtet werden.

Sehr einfach aufgebaut ist eine Ausführungsform der Erfindung, bei der beide Zangeneinheiten längs der Rotorachse gemeinsam verschiebbar sind.

Bei einer Ausführungsform der Erfindung, bei der das Aufnahmeteil matrixförmig quer zur Rotorlängsrichtung und in Rotorlängsrichtung angeordnete Aufnahmen für Ausgleichsgewichte aufweist, ist es möglich, unterschiedliche Ausgleichsgewichtsformen oder -materialien, zum Beispiel Stahlblech oder Aluminiumblechstreifen zum Anschweißen, vorzuhalten. Damit lassen sich auch Rotoren, die in ihrer Form oder ihrem Material unterschiedlich sind, im Mixbetrieb auswuchten. Die Applikation, d.h. die Plazierung und anschließende Befestigung der Ausgleichsgewichte wird weiter vereinfacht durch eine Ausgestaltung, bei der das Aufnahmeteil und die andere Zangeneinheit in Rotorlängsrichtung zueinander verschiebbar sind und beide quer zur Rotorlängsrichtung vorzugsweise gemeinsam verschiebbar sind, da so die Aufnahme mit dem ausgewählten Ausgleichsgewicht und das Gegenelement an der anderen Zangeneinheit schnell einander gegenüberliegend angeordnet werden können.

Eine weitere vorteilhafte Ausgestaltung der Erfindung sieht vor, daß vorzugsweise die untere Zangeneinheit quer zur Rotorlängsrichtung hintereinanderliegende Aufnahmen für Ausgleichsgewichte aufweist, denen in Zangenzustellrichtung jeweils Gegenelemente in entsprechender Anzahl an der anderen Zangeneinheit zugeordnet sind. Damit sind jeder Aufnahme fluchtend gegenüberliegende Gegenelemente zugeordnet und die Auswahl und Applikation des ausgewählten Ausgleichsgewichtes wird durch einfaches gemeinsames Verschieben beider Zangeneinheiten quer zur Rotorlängsachse möglich, ohne daß dabei zusätzliche bewegliche Bauteile erforderlich sind.

Mit einer als Schweißvorrichtung ausgestalteten zangenartigen Einrichtung, die Elektroden an beiden Zangeneinheiten aufweist, können sowohl Punkt- als auch Buckelschweißverfahren zum Einsatz kommen. Für Aluminiummaterial werden bisher MIG- und WIG-Schweißverfahren verwendet, aber auch hier ist inzwischen das Buckelschweißen von vorgeformten Ausgleichsblechen möglich.

Ein besonders einfaches Verfahren zur Applikation des Ausgleichsgewichts sieht vor, daß bei einer zangenartigen Einrichtung mit zwei Zangeneinheiten mehrere Ausgleichsgewichte an vorzugsweise der unteren Zangeneinheit aufgenommen werden. Diese können über ein Aufnahmeteil verschiebbar zur unteren Zangeneinheit aufgenommen werden oder statt dessen direkt auf der unteren Zangeneinheit derart, daß sie nur mit dieser gemeinsam bewegt werden können.

Beim Applikationsverfahren von unverschieblich auf der unteren Zangeneinheit angeordneten Ausgleichsgewichten sind Gegenelemente in der der Anzahl der Ausgleichsgewichte entsprechenden Anzahl an der oberen Zangeneinheit vorgesehen und beide Zangeneinheiten werden gemeinsam quer zur Rotorlängsrichtung verschoben, und nach Plazierung des ausgewählten Ausgleichsgewichts werden dieses und das zugehörige gegenüberliegende Gegenelement zur Anlage am Rotorumfang gebracht und befestigt.

Bei der Applikation unter Verschiebung des Aufnahmeteils wird das ausgewählte Ausgleichsgewicht einem einzigen Gegenelement an der oberen Zangeneinheit gegenüberliegend plaziert und befestigt. Bei nur einer Reihe von quer zur Rotorlängsrichtung auf dem Aufnahmeteil angeordneten Ausgleichsgewichten wird das Aufnahmeteil lediglich quer zur Rotorlängsrichtung auf der unteren Zangeneinheit verschoben, wobei nur der Applikationsvorgang in einer Ausgleichsebene betrachtet ist.

Werden Ausgleichsgewichte in mehreren in Rotorlängsrichtung hintereinanderliegenden Reihen - also matrixförmig auf dem Aufnahmeteil an der unteren Zangeneinheit - vorgesehen, wird bei einem vorteilhaften Verfahren die obere Zangeneinheit, die keine Ausgleichsgewichte trägt, bei der Plazierung des ausgewählten Ausgleichsgewichts nicht verschoben, bleibt also der Ausgleichstelle gegenüberliegend angeordnet. Das Aufnahmeteil kann bei der Plazierung des ausgewählten Ausgleichsgewichts quer zur Rotorlängsrichtung und in Rotorlängsrichtung verschoben werden. Es kann jedoch auch vorgesehen werden, daß Gegenelemente an der oberen Zangeneinheit in Querrichtung entsprechend der Anzahl der in einer Reihe der unteren Zangeneinheit aufgereihten Ausgleichsgewichte angeordnet werden und dann eine Verschiebung des Aufnahmeteils in Rotorlängsrichtung auf der unteren Zangeneinheit und eine gemeinsame Verschiebung von unterer und oberer Zangeneinheit in Querrichtung erfolgt. Schließlich ist auch noch eine Anordnung von Gegenelementen an der oberen Zangeneinheit in Rotorlängsrichtung in einer Anzahl, die der Anzahl der hintereinanderliegenden Ausgleichsgewichtsreihen an der unteren Zangeneinheit entspricht, möglich; hier erfolgt die gemeinsame Verschiebung in Rotorlängsrichtung und die Verschiebung des Aufnahmeteils auf der unteren Zangeneinheit in Querrichtung.

Es liegt im Rahmen der Erfindung, die Ausgleichsgewichte an der oberen Zangeneinheit oder an der oberen und der unteren Zangeneinheit vorzusehen.

Die Erfindung wird nachfolgend anhand von in der Zeichnung dargestellten Ausführungsbeispielen näher erläutert.

Es zeigen:
- Figur 1: eine Vorrichtung zum Befestigen von Ausgleichsgewichten in Seitenansicht,
- Figur 2: die Vorrichtung nach Figur 1 in Vorderansicht,
- Figur 3: einen Teil der Vorrichtung nach Figur 1,
- Figur 4: eine weitere Ausführungsform eines Teils der Vorrichtung nach Figur 1.

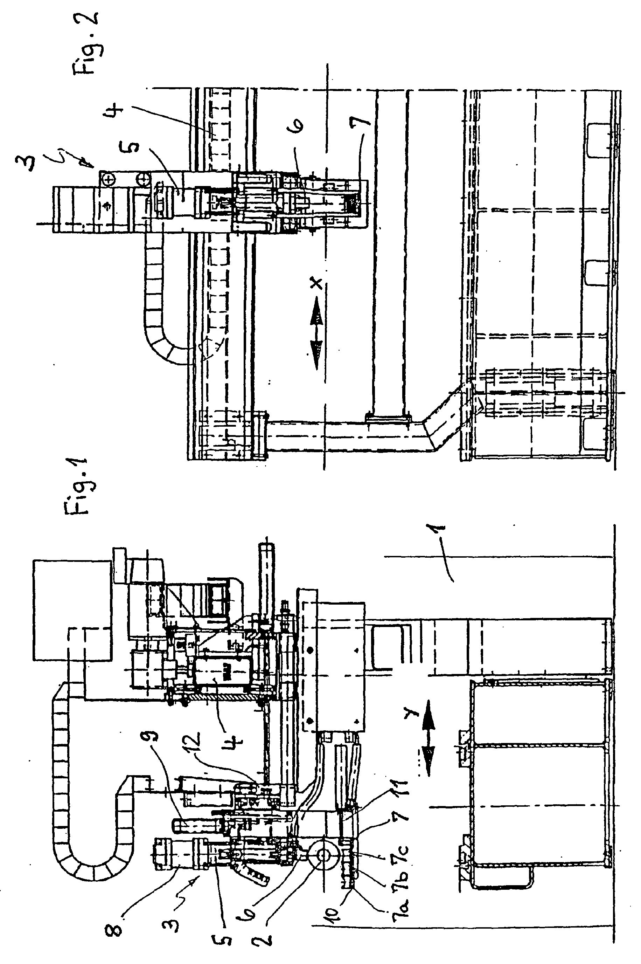

In Figur 1 ist schematisiert eine Auswuchtmaschine 1 angedeutet, in die ein auszuwuchtender Rotor 2 eingelagert ist. Die Auswuchtmaschine 1 umfaßt in nicht näher dargestellter Weise Lagereinrichtungen für den auszuwuchtenden Rotor 2, zumindest einen Drehantrieb, Sensoren zur Erfassung des Drehverhaltens des Rotors 2 und von unwuchtinduzierten Schwingungen sowie eine Auswerteeinrichtung zur Ermittlung der Unwucht des Rotors 2. An der Auswuchtmaschine 1 angeordnet ist ferner eine Vorrichtung 3 zur Befestigung von Ausgleichsgewichten in mehreren Ausgleichsebenen des Rotors 2.

Die Vorrichtung 3 ist in x-Richtung eines rechtwinkligen Koordinatensystems, wie in Figur 2 durch den Doppelpfeil x symbolisiert, auf einer am Rahmen der Auswuchtmaschine 1 angeordneten Führungsschiene 4 längs der Rotorachse, die in der Darstellung nach Figur 2 in der Blattebene liegt, verschiebbar. Die Führungsschiene 4 überspannt die Auswuchtmaschine in Rotorlängsrichtung und ist versetzt nach hinten, bezogen auf die Bedienerseite, zur Rotorachse angebracht. Die Vorrichtung 3 kann somit auf der Führungsschiene 4 in unterschiedlichen Ausgleichsebenen verschoben und anschließend arretiert werden.

Die Vorrichtung 3 ist ferner in y-Richtung wie in Figur 1 durch den Doppelpfeil y angedeutet quer zur Rotorachse verschiebbar, um die Einlagerung des Rotors 2 in die Lagereinrichtungen der Auswuchtmaschine 1 bzw. seine Entnahmen zu ermöglichen. Die Vorrichtung 3 wird dabei zur Einlagerung des Rotors 2 oder seiner Entnahme von der Bedienerseite weg auf die versetzt angebrachte Führungsschiene 4 hin verschoben. Um die Befestigung von Ausgleichsgewichten zu ermöglichen, wird die Vorrichtung 3 nach dem Einlagern des Rotors 2 wieder in Richtung Rotorachse zurückverfahren.

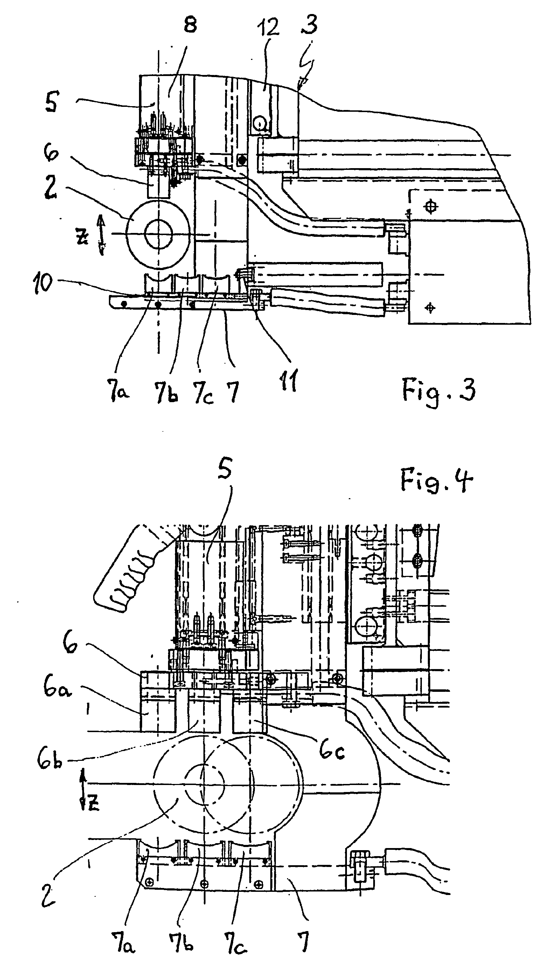

Die Vorrichtung 3 weist eine zangenartige Einrichtung 5 auf, mit der ein Ausgleichsgewicht in der jeweiligen Ausgleichsebene am Außenumfang des Rotors 2 plazierbar und dort befestigbar ist. Die zangenartige Einrichtung 5 umfaßt - wie aus den Figur 3 und 4 näher ersichtlich - zwei in der durch den Doppelpfeil z angedeuteten Zangenzustellrichtung schwimmend zueinander gelagerte Zangeneinheiten 6, 7, die mit Hilfe einer Vorschubeinheit 8 zur Vergrößerung oder Verkleinerung ihres Abstandes relativ zueinander bewegbar sind.

Die zangenartige Einrichtung 5 wird zum Befestigen der Ausgleichsgewichte mit ihren Zangeneinheiten 6, 7 so beiderseits des Rotors 2 diesen teilweise umgreifend angeordnet, daß die Zustellrichtung die Rotorachse schneidet. Die Zangeneinheiten 6, 7 sind gemeinsam mittels einer Vorschubeinheit 8 bis zur Anlage einer der Zangeneinheiten 6, 7 am Rotorumfang bewegbar, im dargestellten Ausführungsbeispiel bis zur Anlage der oberen Zangeneinheit 6 am Rotor 2. Sobald die obere Zangeneinheit 6 an dem Rotor 2 anliegt, wird die untere Zangeneinheit 7 durch die auf sie einwirkende Gegenkraft der Vorschubeinheit 8 ebenfalls in Kontakt mit dem Rotor 2 gebracht. Die Bewegung der unteren Zangeneinheit 7 wird hierbei durch eine in Zangenzustellrichtung z schwimmende Lagerung der zangenartigen Einrichtung 5 an einem Träger 12 ermöglicht. Hierbei ist zur Kompensation ihres Gewichtes die zangenartige Einrichtung 5 über eine vorzugsweise pneumatische Zylindereinheit 9 an dem Träger 12 abgestützt. Die Zylindereinheit 9 wird zur Gewichtskompensation mit reduziertem Druck beaufschlagt. Sie kann zusätzlich mit vollem Druck beaufschlagt werden, um die zangenartige Einrichtung 3 bei nicht eingesetztem Rotor so weit anzuheben, daß zur Lagerung des Rotors vorgesehene Meßlagerständer in x-Richtung überfahren werden können.

Die untere Zangeneinheit 7 ist zur Aufnahme mehrerer Ausgleichsgewichte ausgebildet.

In der Ausführungsform nach Figur 3 sind drei Aufnahmen 7a, 7b und 7c quer zur Längsrichtung des Rotors 2 hintereinanderliegend angeordnet und auf der unteren Zangeneinheit 7 gemeinsam mittels einer Betätigungseinrichtung 11 verschiebbar. Zur gemeinsamen Verschiebung können die Aufnahmen 7a, 7b, 7c auf dem Aufnahmeteil 10 angebracht sein, es können jedoch die Aufnahmen 7a, 7b, 7c auch hintereinanderliegend in einem Führungsprofil verschiebbar sein. Zur Applikation des in der Aufnahme 7c befindlichen, für diese Ausgleichsebene ausgewählten Ausgleichsgewichts, das von der Form her dem Rotorumfang in dieser Ausgleichsebene angepaßt ist, werden die Aufnahmen 7a, 7b, 7c aus der in Figur 3 dargestellten Anordnung, in der die Aufnahme 7a fluchtend zur Rotorachse steht, gemeinsam in die in Figur 1 dargestellte Stellung verschoben, in der die Aufnahme 7c mit dem ausgewählten Ausgleichsgewicht fluchtend zur Rotorachse steht. Die zangenartige Einrichtung 5 wird nun in Zustellrichtung bis zur Anlage der oberen Zangeneinheit 6 am Rotor 2 bewegt. Danach erfolgt die Zustellung der unteren Zangeneinheit 7, wobei die obere Zangeneinheit 6 als Gegenlager dient. Das Ausgleichsgewicht in der Aufnahme 7c wird gegen den Rotorumfang gepreßt und durch einen Schweißvorgang am Rotor 2 befestigt, wobei die obere und die untere Zangeneinheit 6, 7 als Elektroden dienen. Nach dem Öffnen der zangenartigen Einrichtung 5 wird die Vorrichtung 3 in die nächste Ausgleichsebene verfahren und dort ein weiteres Ausgleichsgewicht appliziert, wobei vor sämtlichen Applikationsvorgängen der Rotor 2 in die während der Meßphase ermittelte Ausgleichswinkellage für diese Ausgleichsebene eingedreht wird. Nachdem Ausgleichsgewichte in allen Ausgleichsebenen appliziert sind, wird die Vorrichtung 3 mit der zangenartige Einrichtung 5 in Richtung Führungsschiene 4 zurückgefahren, der Rotor 2 entnommen und ein unwuchtbehafteter Rotor in die Auswuchtmaschine eingelagert, die Unwucht bestimmt und der Ausgleich wie oben beschrieben vorgenommen.

In der Ausführung der zangenartigen Einrichtung 5 nach Figur 4 sind drei Aufnahmen 7a, 7b und 7c an der unteren Zangeneinheit 7 angeordnet, die gegenüber dieser nicht verschiebbar sind. Den drei Aufnahmen 7a, 7b und 7c an der unteren Zangeneinheit 7 sind in Zangenzustellrichtung fluchtend drei Gegenelemente 6a, 6b und 6c an der oberen Zangeneinheit 6 zugeordnet. Zur Applikation des aus den drei Ausgleichsgewichten für die jeweilige Ausgleichsebene ausgewählten Ausgleichsgewichts, beispielsweise des Ausgleichsgewichts 7a für den in Figur 4 strichpunktiert dargestellten Rotorabschnitts mit dem kleinsten Durchmesser, wird die gesamte zangenförmige Einrichtung 5 bzw. die untere und obere Zangeneinheit 6, 7 mit den darauf unverschieblich angeordneten Aufnahmen 7a, 7b, 7c und den Gegenelementen 6a, 6b, 6c so verschoben, daß der Rotor 2 mit seiner Achse fluchtend zwischen dem oberen Gegenelement 6a und der unteren Aufnahme 7a liegt. Danach erfolgt die Applikation bzw. der Schweißvorgang wie oben näher beschrieben.

In den beschriebenen Ausführungsformen sind die Ausgleichsgewichte als Ausgleichsbleche ausgebildet, deren Form dem Rotorumfang in der jeweiligen Ausgleichsebene angepaßt ist. Nachdem ein Rotor 2 ausgeglichen ist, wird die zangenartige Einrichtung 5 zu einer Beladestation verfahren zwecks Bestückung der drei Aufnahmen 7a, 7b, 7c der unteren Zangeneinheit 7 mit Ausgleichsblechen, die beim neu auszuwuchtenden Rotor zum Einsatz kommen sollen. Es versteht sich, daß im Bedarfsfall auch mehr oder weniger als drei hintereinanderliegende Aufnahmen für Ausgleichsgewichte vorgesehen werden können.

In Abänderung der in Figur 3 dargestellten Ausführung kann in nicht näher dargestellter Weise vorgesehen werden, daß weitere Reihen von beispielsweise drei Aufnahmen in Längsrichtung des Rotors hintereinander vorgesehen sind. Dadurch ergibt sich insgesamt eine matrixförmige Anordnung von Aufnahmen, wobei diese zweckmäßig auf einem auf der unteren Zangeneinheit verfahrbaren Aufnahmeteil angeordnet sind Diese auf dem sowohl in Richtung quer zur Rotorlängsachse als auch in Rotorlängsrichtung verfahrbaren Aufnahmeteil angeordneten Aufnahmen können so mit Ausgleichsblechen bestückt werden, daß beispielsweise Rotoren unterschiedlicher Form oder unterschiedlichen Materials im Mixbetrieb ausgewuchtet werden können. Dazu wird zunächst die Vorrichtung in der gewünschten Ausgleichsebene angeordnet und dann beispielsweise das Aufnahmeteil in Rotorlängsrichtung entsprechend der Art des auszuwuchtenden Rotors verfahren, bis die jeweilige Dreierreihe der zugeordneten Ausgleichsbleche in der Ebene steht, in der auch das Gegenelement der oberen Zangeneinheit steht. Die Applikation des aus dieser Dreierreihe ausgewählten Ausgleichsblechs erfolgt wie oben unter Bezug auf Figur 3 näher beschrieben mit Verschiebung des Aufnahmeteils auf der unteren Zangeneinheit.

Es kann jedoch auch vorgesehen werden, daß eine der Anzahl der Dreierreihen an der unteren Zangeneinheit entsprechende Anzahl einzelner Gegenelemente an der oberen Zangeneinheit vorgesehen wird, so daß zur Applikation lediglich eine Verschiebung des Aufnahmeteils an der unteren Zangeneinheit in Querrichtung erforderlich ist, abgesehen natürlich von der Bewegung in Zangenzustellrichtung und der Verschiebung der Vorrichtung in die jeweilige Ausgleichsebene. Bei dieser Ausgestaltung ist es auch sehr einfach möglich, eine Korrekturauswuchtung mittels eines zweiten ergänzenden Unwuchtausgleichsschrittes durchzuführen, der in einer in Rotorlängsrichtung eng benachbarten Ausgleichsebene erfolgt, da nur ein anderes Paar von Gegenelement und Dreierreihe zu wählen ist.

Es versteht sich auch, daß anstelle der oder zusätzlich zu der dargestellten und beschriebenen Schweißeinrichtung auch andere bekannte Befestigungseinrichtungen wie Klebeinrichtungen eingesetzt werden können.

Es liegt im Rahmen der Erfindung, die Vorrichtung zum Befestigen von Ausgleichsgewichten räumlich von der Auswuchtmaschine zu trennen, falls sich dies beispielsweise für eine Fertigungslinie als günstig herausstellt. Der Rotor wird dann von der Auswuchtmaschine in die Vorrichtung umgelagert, wobei Informationen über die ermittelte Unwucht bzw. daraus resultierende Ausgleichsdaten weitergegeben werden.

## Patentansprüche

1. Vorrichtung zum Befestigen von Ausgleichsgewichten an Rotoren (2) mit mehreren Ausgleichsebenen, insbesondere an Gelenkwellen oder Kardanwellen, vorzugsweise in einer Auswuchtmaschine (1), die zumindest eine längs der Rotorachse positionierbare zangenartige Einrichtung (5) aufweist, mit der ein Ausgleichsgewicht am Außenumfang des Rotors (2) plazierbar und dort befestigbar ist, **dadurch gekennzeichnet, daß** die zangenartige Einrichtung (5) zur Aufnahme von mehreren Ausgleichsgewichten ausgebildet ist.

2. Vorrichtung nach Anspruch 1, **dadurch gekennzeichnet, daß** die zangenartige Einrichtung (5) zwei in Zangenzustellrichtung schwimmend zueinander gelagerte Zangeneinheiten (6, 7) umfaßt, die gemeinsam bis zur Anlage einer Zangeneinheit (6 oder 7) am Rotor (2) bewegbar sind, und die andere Zangeneinheit (7 oder 6) durch Relatiwerschiebung zur ersten Zangeneinheit (6 oder 7) am Rotor (2) anlegbar ist.

3. Vorrichtung nach Anspruch 2, **dadurch gekennzeichnet, daß** vorzugsweise die untere Zangeneinheit (7) ein zu dieser und quer zur Rotorlängsrichtung verschiebbares Aufnahmeteil zur Aufnahme mehrerer Ausgleichsgewichte aufweist.

4. Vorrichtung nach Anspruch 3, **dadurch gekennzeichnet, daß** beide Zangeneinheiten (6, 7) in Rotorlängsrichtung gemeinsam verschiebbar sind.

5. Vorrichtung nach Anspruch 3 oder Anspruch 4, **dadurch gekennzeichnet, daß** das Aufnahmeteil matrixförmig quer zur Rotorlängsrichtung und in Rotorlängsrichtung angeordnete Aufnahmen (7a, 7b, 7c) für Ausgleichsgewichte aufweist.

6. Vorrichtung nach Anspruch 5, **dadurch gekennzeichnet, daß** das Aufnahmeteil und die andere Zangeneinheit (6) in Rotorlängsrichtung zueinander verschiebbar sind und beide quer zur Rotorlängsrichtung vorzugsweise gemeinsam verschiebbar sind.

7. Vorrichtung nach Anspruch 2, **dadurch gekennzeichnet, daß** vorzugsweise die untere Zangeneinheit (7) quer zur Rotorlängsrichtung hintereinanderliegende Aufnahmen (7a, 7b, 7c) für Ausgleichsgewichte aufweist, denen in Zangenzustellrichtung jeweils Gegenelemente (6a, 6b, 6c) in entsprechender Anzahl an der anderen Zangeneinheit (6) zugeordnet sind.

8. Vorrichtung nach einem der vorhergehenden Ansprüche, **dadurch gekennzeichnet, daß** die zangenartige Einrichtung (5) als Schweißvorrichtung mit Elektroden an beiden Zangeneinheiten (6, 7) ausgebildet ist.

9. Verfahren zum Befestigen von Ausgleichsgewichten an Rotoren (2) mittels einer zangenartigen Einrichtung (5), bei dem an dieser mehrere Ausgleichsgewichte angeordnet werden, bei dem die mehreren Ausgleichsgewichte quer zur Rotorlängsrichtung bewegt werden und bei dem ein ausgewähltes Ausgleichsgewicht an der Ausgleichsstelle am Rotorumfang plaziert und dort befestigt wird.

10. Verfahren nach Anspruch 9, **dadurch gekennzeichnet, daß** an der zangenartigen Einrichtung (5) zwei schwimmend in Zangenzustellrichtung gelagerte Zangeneinheiten (6, 7) vorgesehen werden und mehrere Ausgleichsgewichte an vorzugsweise der unteren Zangeneinheit (7) aufgenommen werden.

11. Verfahren nach Anspruch 10, **dadurch gekennzeichnet, daß** zur Plazierung des ausgewählten Ausgleichsgewichtes beide Zangeneinheiten (6, 7) quer zur Rotorlängsrichtung gemeinsam verschoben werden.

12. Verfahren nach Anspruch 10, **dadurch gekennzeichnet, daß** bei der Plazierung des ausgewählten Ausgleichgewichtes eine an vorzugsweise der unteren Zangeneinheit (7) angeordnete Aufnahme für Ausgleichsgewichte quer zur Rotorlängsrichtung verschoben wird.

13. Verfahren nach Anspruch 11, **dadurch gekennzeichnet, daß** zur Plazierung des ausgewählten Ausgleichsgewichtes quer zur Rotorlängsrichtung die Zangeneinheit, die keine Ausgleichsgewichte trägt, nicht verschoben wird.

## Claims

1. Device for fastening balancing weights to rotors (2) comprising a plurality of compensation planes, in particular to propeller shafts or cardan shafts, preferably in a balancing machine (1) which comprises at least one gripper-like device (5) which can be positioned along the rotor axis, with which device a balancing weight can be placed on the outer periphery of the rotor (2) and fastened there, **characterised in that** the gripper-like device (5) is constructed to receive a plurality of balancing weights.

2. Device according to claim 1, **characterised in that** the gripper-like device (5) comprises two gripper units (6, 7) mounted so as to float relative to each other in the gripper closing direction, the units being jointly movable until they abut with one gripper unit (6, 7) on the rotor (2), and the other gripper unit (7 or 6) can be placed on the rotor by relative displacement with respect to the first gripper unit (6 or 7).

3. Device according to claim 2, **characterised in that** preferably the lower gripper unit (7) comprises a receiver part, which can be displaced toward the unit and transversely to the longitudinal direction of the rotor, for receiving a plurality of balancing weights.

4. Device according to claim 3, **characterised in that** two gripper units (6, 7) are jointly displaceable in the longitudinal direction of the rotor.

5. Device according to either claim 3 or claim 4, **characterised in that** the receiver part comprises receivers (7a, 7b, 7c) for balancing weights which are arranged in the manner of a matrix transversely to the longitudinal direction of the rotor and in the longitudinal direction of the rotor.

6. Device according to claim 5, **characterised in that** the receiver part and the other gripper unit (6) can be displaced relative to each other in the longitudinal direction of the rotor and can both be displaced transversely to the longitudinal direction of the rotor and preferably jointly.

7. Device according to claim 2, **characterised in that** preferably the lower gripper unit (7) comprises receivers (7a, 7b, 7c) for balancing weights which are located one behind the other transversely to the longitudinal direction of the rotor, with which receivers, in the gripper closing direction, respective counter elements (6a, 6b, 6c) are associated in a corresponding number to the other gripper unit (6).

8. Device according to any one of the preceding claims, **characterised in that** the gripper-like device (5) is constructed as a welding device with electrodes at both gripper units (6, 7).

9. Method for fastening balancing weights to rotors (2) by means of a gripper-like device (5) wherein a plurality of balancing weights are arranged thereon, wherein the plurality of balancing weights are moved transversely to the longitudinal direction of the rotor and wherein a selected balancing weight is placed on the balancing point at the periphery of the rotor and fastened there.

10. Method according to claim 9, **characterised in that** two gripper units (6, 7), mounted so as to float in the gripper closing direction, are provided on the gripper-like device (5) and a plurality of balancing weights can be received at preferably the lower gripper unit (7).

11. Method according to claim 10, **characterised in that** the two gripper units (6, 7) are jointly displaced transversely to the longitudinal direction of the rotor for placement of the selected balancing weight.

12. Method according to claim 10, **characterised in that** when placing the selected balancing weight, a receiver for balancing weights arranged at preferably the lower gripper unit (7) is displaced transversely to the longitudinal direction of the rotor.

13. Method according to claim 11, **characterised in that** for placement of the selected balancing weight transversely to the longitudinal direction of the rotor, the gripper unit, which does not carry a balancing weight, is not displaced.

## Revendications

1. Dispositif pour fixer des poids d'équilibrage sur des rotors (2) avec plusieurs niveaux d'équilibrage, notamment sur des arbres articulés ou des arbres de cardan, de préférence dans une machine d'équilibrage (1) qui comporte au moins un dispositif (5) en forme de pince pouvant être positionné le long de l'axe du rotor et avec lequel un poids d'équilibrage peut être positionné sur la circonférence externe du rotor (2) et y être fixé, **caractérisé en ce que** le dispositif en forme de pince (5) est dimensionné pour pouvoir recevoir plusieurs poids d'équilibrage.

2. Dispositif selon la revendication 1, **caractérisé en ce que** le dispositif en forme de pince (5) comporte deux unités de pince (6 ou 7) logées flottantes l'une vers l'autre en direction du mouvement de pincement, lesquelles unités peuvent être déplacées ensemble jusqu'à ce qu'une unité de pince (6 ou 7) bute contre le rotor (2) et l'autre unité de pince (7 ou 6) peut être plaquée contre le rotor (2) par un déplacement relatif par rapport à la première unité de pince (6 ou 7).

3. Dispositif selon la revendication 2, **caractérisé en ce que** de préférence l'unité de pince inférieure (7) est munie d'une partie de réception pouvant être déplacée par rapport à celle-ci et perpendiculairement à la direction longitudinale du rotor pour recevoir plusieurs poids d'équilibrage.

4. Dispositif selon la revendication 3, **caractérisé en ce que** les deux unités de pince (6, 7) peuvent être déplacées ensemble en direction longitudinale du rotor.

5. Dispositif selon la revendication 3 ou 4, **caractérisé en ce que** la partie de réception est munie de logements (7a, 7b, 7c) pour les poids d'équilibrage disposés en forme de matrice perpendiculairement à la direction longitudinale du rotor et en direction longitudinale du rotor.

6. Dispositif selon la revendication 5, **caractérisé en ce que** la partie de réception et l'autre unité de pince (6) peuvent être déplacées en direction l'une de l'autre en direction longitudinale du rotor et **en ce que** les deux peuvent être déplacées perpendiculairement à la direction longitudinale du rotor, de préférence ensemble.

7. Dispositif selon la revendication 2, **caractérisé en ce que** de préférence l'unité de pince inférieure (7) est munie de logements (7a, 7b, 7c) pour les poids d'équilibrage situés les uns derrière les autres perpendiculairement à la direction longitudinale du rotor et auxquels correspondent en direction du mouvement de pincement des contréléments (6a, 6b, 6c) en nombre correspondant sur l'autre unité de pince (6).

8. Dispositif selon l'une des revendications précédentes, **caractérisé en ce que** le dispositif en forme de pince (5) est conçu sous la forme d'un dispositif de soudure avec des électrodes sur les deux unités de pince (6, 7).

9. Procédé pour la fixation de poids d'équilibrage sur des rotors (2) au moyen d'un dispositif en forme de pince (5) dans lequel plusieurs poids d'équilibrage sont disposés sur celui-ci, dans lequel les plusieurs poids d'équilibrage sont déplacés perpendiculairement à la direction longitudinale du rotor et dans lequel un poids d'équilibrage choisi est placé au point d'équilibrage sur la circonférence du rotor et y est fixé.

10. Procédé selon la revendication 9, **caractérisé en ce qu'**il est prévu sur le dispositif en forme de pince (5) deux unités de pince (6, 7) logées flottantes en direction du mouvement de pincement et plusieurs poids d'équilibrage sont prélevés de préférence de l'unité de pince inférieure (7).

11. Procédé selon la revendication 10, **caractérisé en ce que** les deux unités de pince (6, 7) sont déplacées ensemble perpendiculairement à la direction longitudinale du rotor pour placer le poids d'équilibrage choisi.

12. Procédé selon la revendication 10, **caractérisé en ce qu'**un logement pour les poids d'équilibrage, disposé de préférence sur l'unité de pince inférieure (7), est déplacé perpendiculairement à la direction longitudinale du rotor lors de la mise en place du poids d'équilibrage choisi.

13. Procédé selon la revendication 11, **caractérisé en ce que** l'unité de pince qui ne porte pas de poids d'équilibrage n'est pas déplacée pour la mise en place du poids d'équilibrage choisi.
